# EUROPEAN PATENT SPECIFICATION

(11) **EP 1 143 802 B1**
(45) Date of publication and mention of the grant of the patent: **08.12.2004**
(21) Application number: 99962406.7
(22) Date of filing: 22.12.1999
(51) Int. Cl.: A22B 3/06, A22B 3/08

(54) **PROCESS FOR SLAUGHTERING FISH**
FISCHSCHLACHTVERFAHREN
PROCEDE D'ABATTAGE DU POISSON

(30) Priority: 23.12.1998 GB 9828642
(43) Date of publication of application: 17.10.2001
(73) Proprietor: Moller, Dag, 5152 Bones (NO)
(72) Inventor: MOLLER, Dag, N-5152 Bones (NO); ROTH, Bjorn, N-5239 Radal (NO)
(74) Representative: Rackham, Stephen Neil
(86) International application number: PCT/GB1999/004361
(87) International publication number: WO 2000/038530

(56) References cited:
- DE-A- 2 321 646
- US-A- 5 253 610
- AZAM ET AL: "Effect of slaughter method on the progress of rigor of rainbow trout (Salmo gairdneri) as measured by an image processing system" INTERNATIONAL JOURNAL OF FOOD SCIENCE AND TECHNOLOGY, vol. 25, no. 4, 4 August 1990 (1990-08-04), pages 477-482, XP000884028 cited in the application

## Description

Fish which are caught or farmed for human consumption have a poor shelf life in comparison to other foods such as meat and poultry. One reason for this is that fish tissue has a high level of lysosomes. Another reason is that unlike the slaughter of farm animals, fish generally are subjected to a high level of stress prior to death and have the opportunity to struggle, often to the point of exhaustion, which causes a high metabolic response. For example, ocean caught fish are generally crowded together and left to suffocate after being landed. Likewise, farm reared fish, such as salmon, are often pumped directly out of their pens to a processing unit where they are first anaesthetized within a tank of water through which gaseous carbon dioxide is bubbled, before being slaughtered. However, this technique also causes distress as several minutes exposure to carbon dioxide is required to anaesthetize the fish fully. Alternatively, the salmon are simply pumped aboard trailers or boats and killed with a blow to the head, a spike to the brain, by gill-cutting and gutting or by suffocation. There is very little legislation relating to the slaughter of fish, although this is likely to change in the future as pressure from animal rights groups and markets mounts.

The effect of stress prior to death is to induce panic. Consequently, the fish fight hard to escape and survive causing a considerable metabolic response, which primarily involves high anaerobic depletion of glycogen reserves and breakdown of adenosine triphosphate (ATP). The post mortem effect of this is an earlier state of rigor mortis, high levels of ATP bi-products which adversely affect taste, and an accumulation of lactic acid which lowers muscle pH. This causes connective tissue to break up (gaping) and give a soft texture. This is accompanied by the release of lysosomes which leads to enzymatic breakdown and provides the necessary conditions for bacterial contamination, all of which contributes to a shorter shelf life for fresh fish. Early onset of rigor mortis causes problems because fish are easier to fillet and pack whilst in a relaxed state. This is particularly a problem in areas such as Scotland, the Faroe Islands or Ireland where fish are not packed on site, but are slaughtered by suffocation at the fish farm and may be transported for several hours to a packing plant, by which time rigor mortis may have set in. Rigor mortis is also used as a measure of freshness by buyers of fresh fish. If the fish are in rigor, they are known to be relatively fresh. It is therefore advantageous to delay the onset of rigor mortis. Furthermore, if fish are subjected to high levels of stress before death, some may be physically injured prior to death as they fight to survive and consequently have a lower market value or go to waste since visual appeal plays a significant part in the sale of fresh fish.

Electric fishing is a known scientific research technique in which an electrical field is generated to attract fish within a local area of open water. Fish are subsequently caught and examined before being released back into the water. However, conventional electric fishing can inflict considerable injury to those fish closest to the electrodes, both in terms of broken vertebrae and haemorrhaging, as a great deal of power is required to cover any significant volume of water believed to contain fish and the electrical field is not uniform. Electric fishing is not commonly used in sea water, which has a high electrical conductivity, and is instead restricted to freshwater streams and rivers, typically for fish population analysis. It is also known to use electricity to induce narcosis in fish to replace the use of chemical anaesthetics when carrying out research.

It has recently been suggested that electro-narcosis may be a suitable method for anaesthetizing fish prior to slaughter. Several experiments have been carried out, but no satisfactory results have been obtained. Azam et al (International Journal of Food Science and Technology 1990 25, 477-482) used both 225 V sinusoidal AC at 50Hz and 175V full wave rectified AC for 10s exposure times to stun rainbow trout, but found no significant improvements in meat quality. Marx et al (Z Lebensm Unters Forsch A 1997 204, 282-286) used pulsed DC from 0-160V in 30s cycles on eels, carp and trout but found significant muscle bleeding, haematomas and blood spots along the vertebral column which adversely affected the appearance of the meat.

### STATEMENT OF THE INVENTION

According to a first aspect of the present invention, a process for slaughtering fish or preparing fish for slaughter, transport or vaccination includes the steps of inducing electro-narcosis or death by exposing the fish to an alternating electrical field having a frequency of greater than 20 Hz for a predetermined duration wherein if the frequency is less than 200Hz, the duration is less than 2 seconds.

According to a second aspect of the present invention, an apparatus for carrying out the process of the first aspect of the present invention comprises means defining a containment volume for fish, the containment volume being filled with water and means for generating an alternating electrical field having a frequency greater than 20 Hz within the containment volume and means for limiting the exposure time of the fish to the electric field to a predetermined duration wherein if the frequency is less than 200Hz, the duration is less than 2 seconds.

The fish are either killed directly by cardiac arrest caused by the electric field or are stunned. If the fish are stunned, this enables transport or vaccination of the fish without causing stress.

Preferably the method and apparatus of the present invention are used for slaughtering fish, preferably for human consumption. More preferably, the fish are only stunned by the electric field and are subsequently killed whilst unconscious.

In the present invention, electricity is used to induce a state of electro-narcosis and the fish are then killed whilst still anaesthetized. The fish may be killed by removing their heads or may simply be left to suffocate to death whilst unconscious, in which case they may also be gill-cut to help empty the fish of blood. This substantially eliminates stress in fish prior to death so that there is a minimum metabolic response. The reduction in stress prior to death improves the quality of the fish in terms of texture, taste and visual appearance so that the fish can command a higher market value. Importantly, fish slaughtered in this manner will remain fresh for a longer period and so have an improved shelf-life. This also means that the fish can reach a far wider market than was possible hitherto. In contrast to conventional techniques, electro-narcosis may be regarded as a very much more humane way of slaughtering fish than at present.

The physiological effect of the electrical field is to block muscle tissue and to shock the nervous system, thereby causing contraction and narcosis. An inappropriate electrical field can cause muscle oedema, arterial damage, compressed and broken vertebrae and at the extreme, cardiac arrest. The main reason for physical injuries are the muscle contractions caused by the electrical field. Arterial damage is often caused when muscle contractions rip off veins or when the second lamella on gills burst as blood pressure rises when the heart muscle contracts in response to the electrical field.

The present inventors have found that reduction of the exposure time to below 2 seconds can reduce the level of injuries when the frequency of the field is below 200 Hz. Preferably at these frequencies, the exposure time is less than 1.5 seconds. However, below 200 Hz, the maximum exposure time to avoid injuries can vary slightly depending on the size or species of fish, and so it is preferable to use a frequency of greater than 200 Hz. At these frequencies there is substantially no upper limit on exposure time, although different species require different minimum field strengths or exposure times to induce electro-narcosis. However, long exposure times are found to accelerate the onset of rigor mortis due to depletion of ATP caused by the electrical stimulation of the muscles. It is therefore preferable that, even at frequencies above 200 Hz, the exposure time is less than 30 seconds. More preferably the exposure time is less than 10 seconds.

The present inventors have found that at frequencies over 200 Hz the muscle bleeding, haematoma and broken vertebrae caused by the muscle spasms induced by the electrical field are also substantially reduced. It is believed that this is because the nervous system is more sensitive to higher frequencies than muscle tissue which is more sensitive to lower frequencies and therefore at high frequencies, electronarcosis may be induced without causing muscle spasms. The inventors have found that, salmon are most sensitive to a field at 80 Hz ie most injuries are caused, and at frequencies higher than this, the level of injuries decreases to an acceptable level at about 200 Hz. More preferably the frequency is greater than 500 Hz.

At frequencies above 500 Hz, substantially no injuries occur. However, at increasing frequency the fish become less sensitive to the electric field strength, and so higher field strengths are required to induce electronarcosis. This is due to the "skin effect", wherein at high frequencies the current passes along the skin instead of inside the fish. It is therefore preferable that the frequency is less than 10000 Hz, more preferably less than 2000 Hz, in order to achieve a low injury level without excessive power consumption or complicated and potentially dangerous apparatus. The optimum frequency range is 500-1000 Hz. In this range, the electrical field strength required is less than approximately 250 V/m.

The physiological similarities between different species of fish are such that at frequencies over 200 Hz, the present invention is suitable for anaesthetizing any species of fish. Although different species may require varying field strengths or exposure times to achieve electro-narcosis, higher field strengths or longer exposure times than necessary will not cause injuries. The frequency effect is also substantially independent of the size of the fish. The present invention is equally applicable to both ocean caught fish and farmed fish. The present invention may also be used with crustaceans such as lobsters or crabs. The fish may be anaesthetized in situ by generating an electrical field within a breeding pen, net or other form of containment. Alternatively, the fish may be anaesthetized by passing them through a suitable electrical field during transport from a pen or net, for instance by pumping the fish through a pipe in which an electric field is generated. This has the advantage that the fish are all swimming in the direction of the flow of water through the pipe and so are aligned at 0 degrees to the direction of the electric field. This maximises the effect of electro-narcosis as the nervous system is aligned with the field.

The objective is to ensure that the fish remain unconscious until dead. Generally, a period of 10 minutes will ensure that they die from suffocation without regaining consciousness. This period can be extended by the use of iced water and carbon dioxide.

In one preferred embodiment of the present invention, the fish are pumped from a pen or net and pass through one or more electrical fields generated in-line within a pump hose or pipe to induce electro-narcosis.

In an alternative embodiment, suitable for farm reared fish, an electrical field is generated within a predetermined area within the pen and the fish are drawn into this area. Once electro-narcosis is achieved, the fish are collected for slaughter. The fish may be drawn into the predetermined area by reducing the size of the pen, by inducing a positive flow of water towards the predetermined area, by trapping, by pumping, by electrotaxis or by a combination of these. In a preferred arrangement, an electrical field is generated within a partially closed housing having an opening for the fish to enter. Fish within the pen may be drawn towards and into the housing using an artificially created flow of water. Once a sufficient number of fish are within the housing an electrical field is established to induce electro-narcosis. The walls of the housing provide electrical isolation for fish outside.

Alternatively, it is possible to modify equipment already available and in use for anaesthetising fish with carbon dioxide. Such equipment generally includes a tank into which fish are pumped, having a semi circular cross section. This can be provided with electrodes on each side to induce an electric field across the tank. Preferably the electrodes are distributed substantially uniformly. Once the fish are anaesthetised, an emptying grate pivoted at the centre of the semi-circular tank sweeps the tank to remove the anaesthetised fish and deposit them onto a conveyor belt which takes the fish to a gutting station. The gutting may be carried out by hand or by machine.

### BRIEF DESCRIPTION OF THE DRAWINGS

Examples of the present invention will now be described with reference to the accompanying drawings in which:-
Figure 1 shows a vacuum pump used to transport fish from a pen, net or other form of containment;
Figure 2 shows a pen with a separate electric compartment;
Figure 3 shows a side sectioned view of an apparatus according to the present invention;
Figure 4 shows a plan view of the apparatus of Figure 3;
Figure 5 shows the arrangement of electrodes in the stunning chamber;
Figure 6 shows a plan view of the arrangement of electrodes in the stunning chamber.

### DESCRIPTION OF THE PREFERRED EXAMPLES

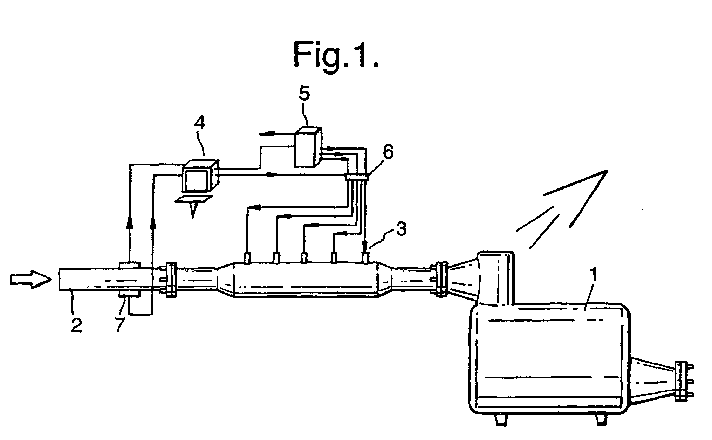

Salmon, Herring, Tuna, Cod and other pelagic or farmed species are typically transported from a pen or net to a slaughterhouse or fishing vessel, respectively, using pumps as shown in Figure 1. In the apparatus of Figure 1, a vacuum pump 1 is provided in which electrical field is generated in a section of pipe 2 using a series of electrodes 3.

Fish which are drawn into the hose 2 from a net or pen, along with a body of water, are transferred at a predetermined velocity controlled by the vacuum pump 1. A processor 4 is provided to control a transformer supply 5 and a set of relays 6 to adjust a number of electrical field variables to account for different species and size of fish, water velocity, water conductivity and water temperature. Water velocity and conductivity are continuously monitored by a sensor 7 which feeds information back to the processor 4.

In this example, an electrical field is generated from an AC supply at 50 Hz. The magnitude of the electrical voltage depends on the species size of fish, water temperature and conductivity, and the distance between the electrodes. For example, if salmon weighing between 3 and 4 Kg are to be anaesthetized, assuming a transport speed of 1.5 ms⁻¹, to achieve electro-narcosis at a water temperature of 10°C and 335ppm salinity, the electric strength required is 1.25 volts per centimetre of piping and therefore the voltage potential difference between the furthermost electrodes should be approximately 280 volts. Doubling the water velocity to 3 ms⁻¹ means that the distance between the furthermost electrodes 3 in the pipe should be extended to 4.5 metres to maintain an exposure time of 1.5 seconds and the voltage potential difference between the furthermost electrodes should be increased to approximately 560 volts to maintain a field strength of 1.25 volts per centimetre. As a further example, for salmon weighing between 1 and 2 Kg travelling at 1.5 ms⁻¹, the electric field strength needs to be increased to 1.5 volts per centimetre.

If the frequency is above 200 Hz, there is no upper limit to the exposure time and so there is no lower limit on the water velocity. This considerably simplifies the design of the apparatus. The electric field strength and duration must exceed a threshold for inducing electronarcosis which may depend on species of size of fish. For salmon at 1000 Hz, for example, the field should be 2 volts per centimetre at an exposure time of 3-6 seconds.

Once fish have passed through the electrical field established in the pipe, they are delivered unconscious to the slaughter house or fishing vessel. In fishing vessels, they are killed by suffocation before being stored for subsequent transport to the market. When processing farm reared fish, it is preferred that the fish are gill-cut and gutted.

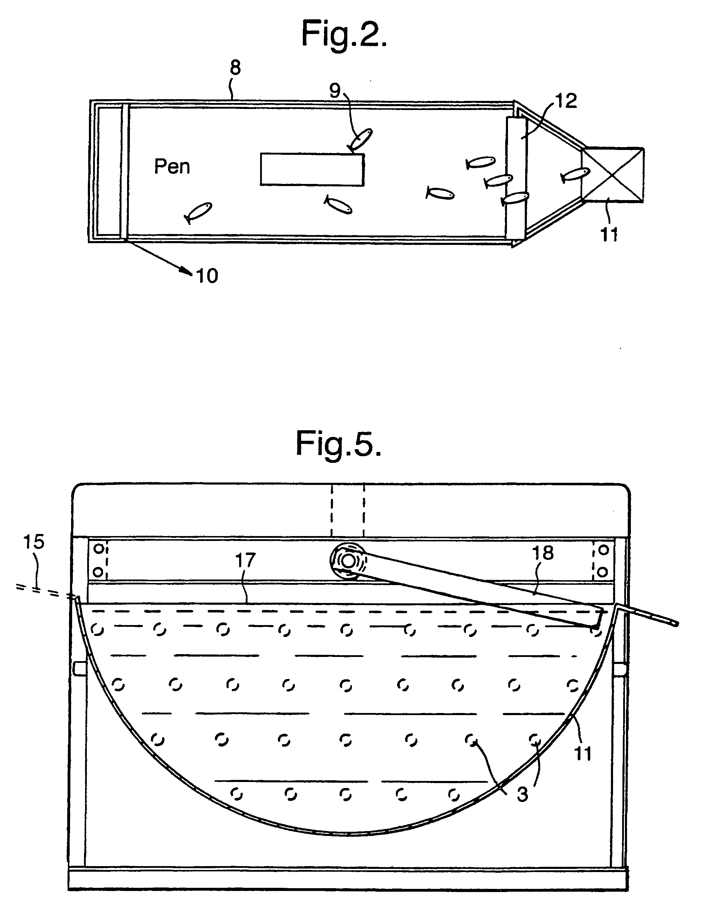

Figure 2 shows an example of apparatus suitable for inducing electro-narcosis in a pen 8. A flow of water through the pen 8 encourages the fish 9 to swim against the flow, and a drive line 10 slowly restricts the size of the pen 8 so that the fish 9 swim into an electric compartment 11 at one end of the pen 8 without being stressed. The electric compartment 11 is periodically isolated from the main pean 8 by a wall 12, and the required field is turned on anaesthetizing the fish inside the compartment 11. The fish can then be removed from the compartment for example, by use of a pump, and transported to a slaughterhouse.

It is important that the field in the chamber is uniform, and should not require too much power. To create a uniform field, the electrodes should cover the whole wall on each side of the chamber. If a small griddle of steel is used, then a current of the order of 300-400 amps would be required.

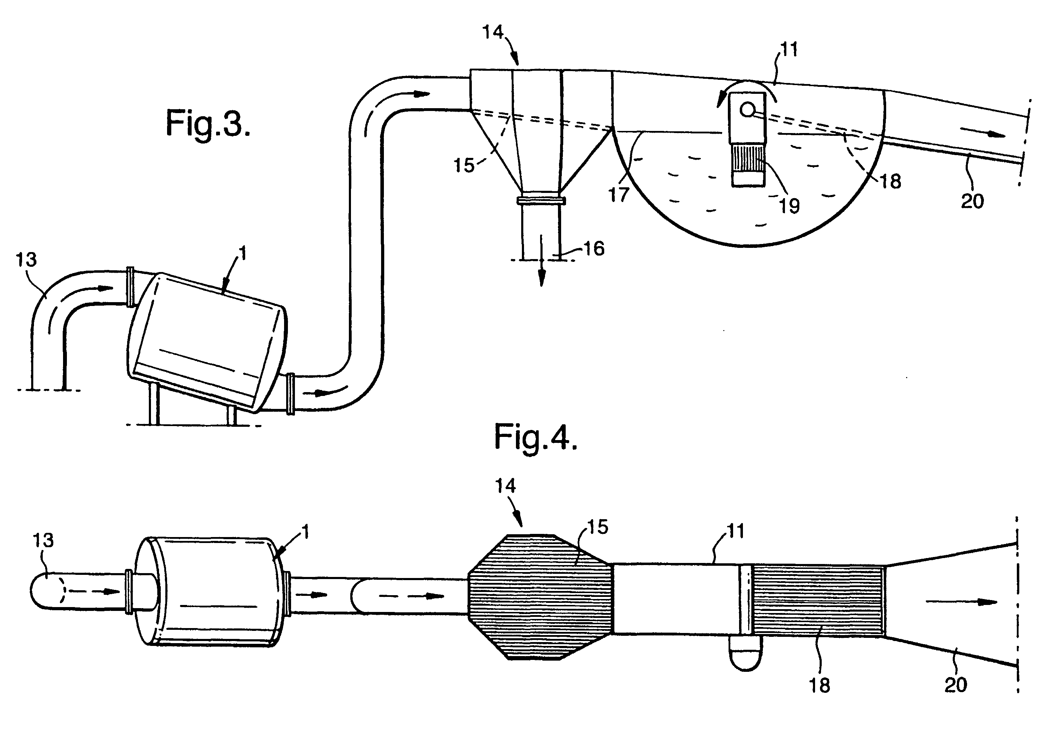

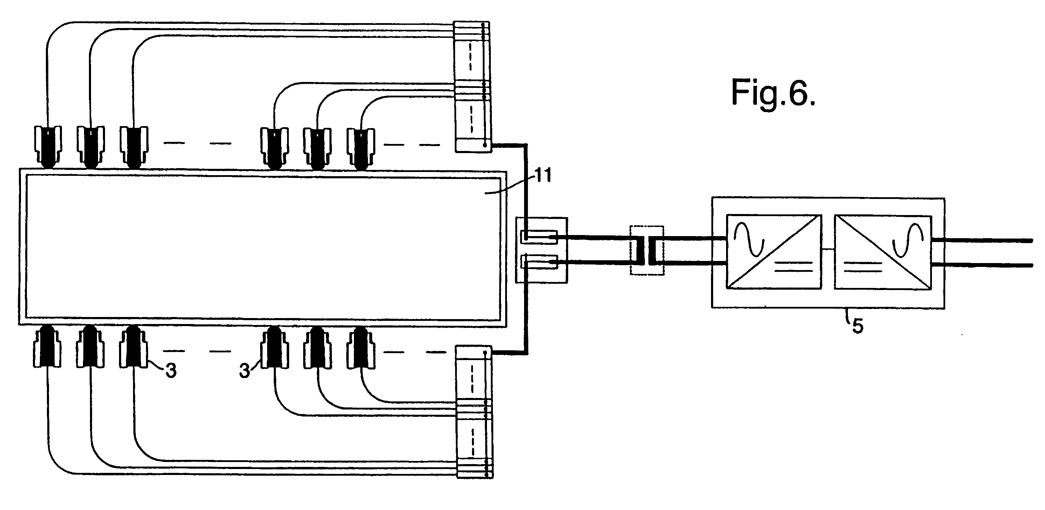

Figures 3 to 6 show how apparatus used for anaesthetising fish with carbon dioxide may be modified in accordance with the present invention. A vacuum pump 1 pumps fish from an inlet 13 into a straining container 14 having a straining grate 15 which allows waste water to flow through into an outlet 16. The straining grate 14 is inclined at an angle such that the fish slide into the stunning chamber 11 which is filled with water to a level 17. The stunning chamber 11 has a semi circular cross section and includes an emptying grate 18 pivoted at the centre of the semi circle and driven by a motor 19. The diameter of the container is approximately 2 m and the width of the container is approximately 0.5m. In conventional apparatus, the chamber 11 is where carbon dioxide is pumped into the water to anaesthetise the fish. In the present invention, the sides of the container include a plurality of electrodes 3, as illustrated in Figures 5 and 6. The electrodes 3 are evenly arranged on a grid at intervals of approximately 200 mm to generate a homogenous field, although, as can be seen from Figure 5, the spacing is varied slightly in each row. The electrodes 3 are connected to an AC power supply 5 which generates a 700Hz output. To anaesthetise the fish, the voltage must be 40-50V RMS across the stunning container 11, and the voltage is applied for 10-15 seconds. After this, the emptying grate 18 is rotated through a full circle to sweep the stunning container 11 and remove the anaesthetised fish. The emptying grate 18 comes to rest in an inclined position as shown in Figure 3 so that the fish slide out onto conveyor 20 to be transported to a gutting station.

## Claims

1. A process for slaughtering fish or preparing fish for slaughter, transport or vaccination includes the steps of inducing electro-narcosis or death by exposing the fish to an alternating electrical field having a frequency of greater than 20 Hz for a predetermined duration wherein if the frequency is less than 200Hz, the duration is less than 2 seconds.

2. A process according to claim 1, for slaughtering fish wherein the fish are stunned by the electric field and are subsequently killed whilst unconscious.

3. A process according to claim 1 or 2, wherein at frequencies less than 200 Hz, the duration is less than 1.5 seconds.

4. A process according to claim 1 or 2, wherein the frequency of the electric field is greater than 200 Hz.

5. A process according to any one of the preceding claims, wherein at frequencies above 200 Hz, the duration is less than 30 seconds.

6. A process according to any one of the preceding claims, wherein at frequencies above 200 Hz, the duration is less than 10 seconds.

7. A process according to any one of the preceding claims, wherein the frequency is greater than 500 Hz.

8. A process according to any one of the preceding claims, wherein the frequency is less than 2000 Hz.

9. A process according to any one of the preceding claims, wherein the frequency is less than 1000Hz.

10. An apparatus for slaughtering fish or preparing fish for slaughter, transport or vaccination comprising means (8, 11) defining a containment volume for fish, the containment volume being filled with water and means for generating an alternating electrical field (5) having a frequency greater than 20 Hz within the containment volume and means for limiting the exposure time of the fish to the electric field to a predetermined duration wherein if the frequency is less than 200Hz, the duration is less than 2 seconds.

11. An apparatus according to claim 10, wherein the fish are pumped from a pen or net and pass through one or more electrical fields generated in-line within a pump hose or pipe to induce electro-narcosis.

12. An apparatus according to claim 10, wherein an electrical field is generated within a predetermined area (11) within a pen (8) and the apparatus includes means (10) to draw the fish into this area by reducing the size of the pen and creating a flow of water towards the predetermined area.

13. An apparatus according to claim 10, wherein the containment volume comprises a tank (11) having a substantially semi circular cross section with electrodes (3) on each side to induce an electric field across the tank and an emptying grate (18) pivoted at the centre of the semi-circular tank which sweeps the tank to remove the anaesthetised fish.

## Patentansprüche

1. Verfahren zum Schlachten oder zum Vorbereiten des Schlachtens von Fisch, Transport oder Impfung, umfassend folgende Stufen:
Herbeiführen einer Elektro-Narkose oder des Todes, in dem der Fisch einem elektrischen Wechselfeld ausgesetzt wird, das eine Frequenz größer als 20 Hz für eine bestimmte Zeitspanne besitzt, wobei falls die Frequenz geringer als 200 Hz ist, die Dauer geringer als 2 Sekunden beträgt.

2. Verfahren nach Anspruch 1 zum Schlachten von Fisch, wobei die Fische durch das elektrische Feld betäubt und anschließend getötet werden, während sie bewusstlos sind.

3. Verfahren nach Anspruch 1 oder 2, bei dem bei Frequenzen geringer als 200 Hz und die Dauer geringer als 1,5 Sekunden ist.

4. Verfahren nach Anspruch 1 oder 2, bei dem die Frequenz des elektrischen Feldes größer als 200 Hz ist.

5. Verfahren nach irgendeinem der vorstehenden Ansprüche, bei den bei Frequenzen oberhalb von 200 Hz die Dauer geringer als 30 Sekunden beträgt.

6. Verfahren nach irgendeinem der vorstehenden Ansprüche, bei den bei Frequenzen oberhalb von 200 Hz die Dauer geringer als 10 Sekunden beträgt.

7. Verfahren nach irgendeinem der vorstehenden Ansprüche, bei dem die Frequenz größer als 500 Hz beträgt.

8. Verfahren nach irgendeinem der vorstehenden Ansprüche, bei dem die Frequenz geringer als 2000 Hz beträgt.

9. Verfahren nach irgendeinem der vorstehenden Ansprüche, bei dem die Frequenz geringer als 1000 Hz beträgt.

10. Vorrichtung zum Schlachten oder zum Vorbereiten des Schlachtens von Fisch, Transport oder Impfung, umfassend Mittel (8,11), die ein Behältervolumen für Fisch definieren, wobei das Behältervolumen mit Wasser und Mitteln zum Erzeugen eines elektrischen Wechselfeldes (5) gefüllt wird, dass eine Frequenz größer als 20 Hz innerhalb des Behältervolumens und Mittel zum Begrenzen der Aussetzungszeit der Fische für das elektrische Feld für eine vorbestimmte Dauer besitzen, wobei die Frequenz geringer als 200 Hz und die Dauer geringer als 2 Sekunden ist.

11. Vorrichtung nach Anspruch 10, bei der die Fische aus einer Pferch oder einem Netz gepumpt werden und ein oder mehrere elektrische Felder durchlaufen, die innerhalb eines Pumpenschlauches oder Rohres in-line erzeugt werden um Elektro-Narkose zu erzeugen.

12. Vorrichtung nach Anspruch 10, bei der ein elektrisches Feld innerhalb eines vorbestimmten Bereiches (11) innerhalb einer Pferch (8) erzeugt wird, und wobei die Vorrichtung Mittel (10) umfasst, um den Fisch in diesen Bereich hineinzuziehen, in dem die Größe der Pferch verringert und eine Wasserströmung in Richtung auf den vorbestimmten Bereich erzeugt wird.

13. Vorrichtung nach Anspruch 10, bei der das Behältervolumen einen Tank (11), der einen im wesentlichen halbkreisförmigen Querschnitt mit Elektroden (3) an jeder Seite besitzt, um ein elektrisches Feld quer über den Tank zu induzieren, und wobei ein Entleerungsgitter (18) schwenkbar am Zentrum des halbkreisförmigen Tanks gelagert ist, dass den Tank kehrt, um anästhesierten Fisch zu entfernen.

## Revendications

1. Procédé d'abattage du poisson, ou de préparation du poisson pour l'abattage, le transport ou la vaccination, qui comprend les étapes consistant à induire une électro-narcose ou la mort en exposant le poisson à un champ électrique alternatif d'une fréquence supérieure à 20 Hz pendant un laps de temps prédéterminé, dans lequel, si la fréquence est inférieure à 200 Hz, la durée est inférieure à 2 secondes.

2. Procédé selon la revendication 1, d'abattage du poisson, dans lequel le poisson est étourdi par le champ électrique, et est ensuite abattu alors qu'il est inconscient.

3. Procédé selon la revendication 1 ou 2 dans lequel, à des fréquences inférieures à 200 Hz, la durée est inférieure à 1,5 seconde.

4. Procédé selon la revendication 1 ou 2, dans lequel la fréquence du champs électrique est supérieure à 200 Hz.

5. Procédé selon l'une quelconque des revendications précédentes dans lequel, à des fréquences supérieures à 200 Hz, la durée est inférieure à 30 secondes.

6. Procédé selon l'une quelconque des revendications précédentes dans lequel, à des fréquences supérieures à 200 Hz, la durée est inférieure à 10 secondes.

7. Procédé selon l'une quelconque des revendications précédentes, dans lequel la fréquence est supérieure à 500 Hz.

8. Procédé selon l'une quelconque des revendications précédentes, dans lequel la fréquence est inférieure à 2000 Hz.

9. Procédé selon l'une quelconque des revendications précédentes, dans lequel la fréquence est inférieure à 1000 Hz.

10. Appareil d'abattage du poisson ou de préparation du poisson pour l'abattage, le transport ou la vaccination, comprenant des moyens (8, 11) définissant un volume de retenue pour le poisson, le volume de retenue étant rempli d'eau, et des moyens pour générer un champ électrique alternatif (5) avec une fréquence supérieure à 20 Hz dans le volume de retenue, et des moyens pour limiter le temps d'exposition du poisson au champ électrique à une durée prédéterminée, dans lequel, si la fréquence est inférieure à 200 Hz, la durée est inférieure à 2 secondes.

11. Appareil selon la revendication 10, dans lequel le poisson est pompé à partir d'un parc ou d'un filet, et traverse un ou plusieurs champs électriques générés en ligne à l'intérieur d'un tuyau ou d'une conduite de pompe, pour induire une électro-narcose.

12. Appareil selon la revendication 10, dans lequel un champ électrique est généré à l'intérieur d'une région prédéterminée (11) dans un parc (8), et l'appareil comprend des moyens (10) pour attirer le poisson dans cette région en réduisant la taille du parc et en créant un courant d'eau en direction de la région prédéterminée.

13. Appareil selon la revendication 10, dans lequel le volume de retenue comprend un réservoir (11) présentant une section transversale sensiblement semi-circulaire, avec des électrodes (3) de chaque côté, pour induire un champ électrique dans le réservoir, et une grille de vidage (18) pivotant au centre du réservoir semi-circulaire, qui balaie le réservoir pour retirer le poisson anesthésié.
